# EUROPEAN PATENT SPECIFICATION

(11) **EP 1 917 087 B1**
(45) Date of publication and mention of the grant of the patent: **15.04.2009**
(21) Application number: 06754297.7
(22) Date of filing: 08.06.2006
(51) Int. Cl.: B01D 35/16, B01D 35/30, F01M 11/03, F01M 11/04

(54) **FILTER DEVICE FOR OIL FILTRATION**
FILTERVORRICHTUNG ZUR ÖLFILTRATION
DISPOSITIF FILTRANT POUR FILTRATION DE L'HUILE

(30) Priority: 22.07.2005 IT RE20050089
(43) Date of publication of application: 07.05.2008
(73) Proprietor: UFI Filters S.p.A., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2006/005607
(87) International publication number: WO 2007/009533

(56) References cited:
- WO-A-01/19491
- DE-A1- 19 852 587
- FR-A- 2 828 909
- US-A- 5 858 227

## Description

### TECHNICAL FIELD

The present invention relates to a filter device for oil filtration, in accordance with the introduction to claim 1.

More particularly, the present invention relates to a filter device for oil filtration, with its axis disposed horizontally.

### PRIOR ART

As known, oil filter devices, or simply filters, of horizontal or nearly horizontal axis comprise a container of horizontal axis, usually fixed to the engine crankcase, and a cover screwed on laterally to form a seal. The fixed container contains the filter cartridge, which is removably coupled to the cover, so that it is withdrawn from the fixed container when unscrewing the cover. While unscrewing the cover, the oil contained in the filter escapes by gravity.

As the cover has to be unscrewed each time the cartridge is replaced, it is advantageous to convey the oil present in the container to a collection tray or to the crankcase before the cover is totally removed, to prevent it escaping from the edge and becoming soiled.

In this respect, the known art provides an oil bleed aperture in the container, at a radially projecting annular stem which extends downwards and engages a bleed conduit as an exact fit.

This bleed aperture must be inaccessible to the oil when the cover is totally screwed onto the container and must be able to be traversed by the residual oil when the cover is unscrewed. However, oil passage through said bleed aperture must take place before the cover is completely removed, in other words before the seal between the cover and the container is lost, said seal being obtained by a seal ring.

To prevent the oil present in the filter from passing through said bleed aperture during normal filter operation, i.e. when the cover is totally screwed down, suitable seal means are used, associated with the cover, to prevent the bleed aperture from being reached by the oil contained in the container.

In particular, the cover is shaped as a cup, the cylindrical portion of which is inserted into the container and, when screwed down, surmounts the bleed aperture but without closing it. In proximity to its free end, this cylindrical portion presents an outer threaded region which engages, on the container, a corresponding internal thread provided in a more inward position than the bleed aperture, with respect to the insertion end of the cover.

The means preventing oil access to the bleed aperture are in the form of a sealing O-ring (different from the seal ring between the container and cover) fixed in proximity to the threaded region of the cover such that when this latter is totally screwed down, the O-ring abuts against a specific annular seat provided on the inner wall of the container, between the thread on the container and the bleed aperture.

In particular, the seat for receiving the O-ring is provided by forming an annular step to receive the O-ring as an exact fit and improve the seal.

Partial unscrewing of the cover displaces the sealing O-ring from its seat to enable the oil to pass through the bleed aperture.

In order that the cover remains partially screwed on during the oil bleed and to facilitate the oil bleed, two pairs of opposing flats are provided on the threaded region of the cover, each flat presenting a central traversing hole. Said holes are located along a circumferential line at a distance from the free end such that, when the cover is partially unscrewed, they directly connect the container to the discharge aperture.

Essentially, as already stated, when the cover is totally screwed down, the bleed aperture is not accessible to the oil present in the container because the O-ring is located in its seat on the step, whereas when the cover is partially unscrewed, while the seal against the container is maintained by a specific seal ring, the O-ring translates, leaves its seat and enables the oil to reach the bleed aperture via the holes.

This solution implies certain drawbacks and disadvantages.

In this respect, if the filter is subjected to frequent cartridge replacement, the sealing O-ring of the known art is subjected to stress due to the so-called "nipping" phenomenon which inevitably takes place between the step, forming the abutment surface of the seat, and the O-ring, each time the cover is screwed down.

Consequently with time the seal of the O-ring declines and the bleed aperture can be reached by the oil via the threads even with the cover completely screwed down, with a consequent wastage of still unspent oil.

Moreover, the seal ring between the container and the cover often reaches the bleed aperture when the cover is completely screwed down, so that this ring is also subjected to the "nipping" effect against the edges of the bleed aperture, each time the cover is unscrewed and again screwed down.

There is hence a strongly felt need for an oil filter device of substantially horizontal axis having a bleed aperture through which the residual oil passes when the cover is partially unscrewed, which has a longer life and is more effective in ensuring the seal through the bleed aperture during normal operation, even after multiple unscrewing and rescrewing of the cover.

Radial bleed valves are disclosed in FR-A 2 828 909 and DE-A-198 52 587 and US-A-5 858 227 discloses a radial inlet check valve.

### DISCLOSURE OF THE INVENTION

The object of the present invention is to provide an oil filter device having structural and functional characteristics such as to satisfy said requirements while at the same time obviating the stated drawbacks with reference to the known art.

This object is attained by an oil filter device in accordance with claim 1.

The dependent claims define particularly advantageous preferred embodiments of the filter device of the invention.

### BRIEF DESCRIPTION OF THE DRAWINGS

Further characteristics and the advantages of the invention will be apparent on reading the ensuing description given by way of non-limiting example with reference to the figures of the accompanying drawings, in which:
Figures 1A and 1B are an axial section through a filter device according to the present invention, with the cover completely screwed down and partially unscrewed respectively;
Figure 2 is a detail of Figure 1 B;
Figure 3 is a section on the line III-III of Figure 2;
Figure 4 is an axial section through the cover of the device of Figures 1A and 1 B;
Figure 5 is a section on the line V-V of Figure 4.

### BEST MODE FOR CARRYING OUT THE INVENTION

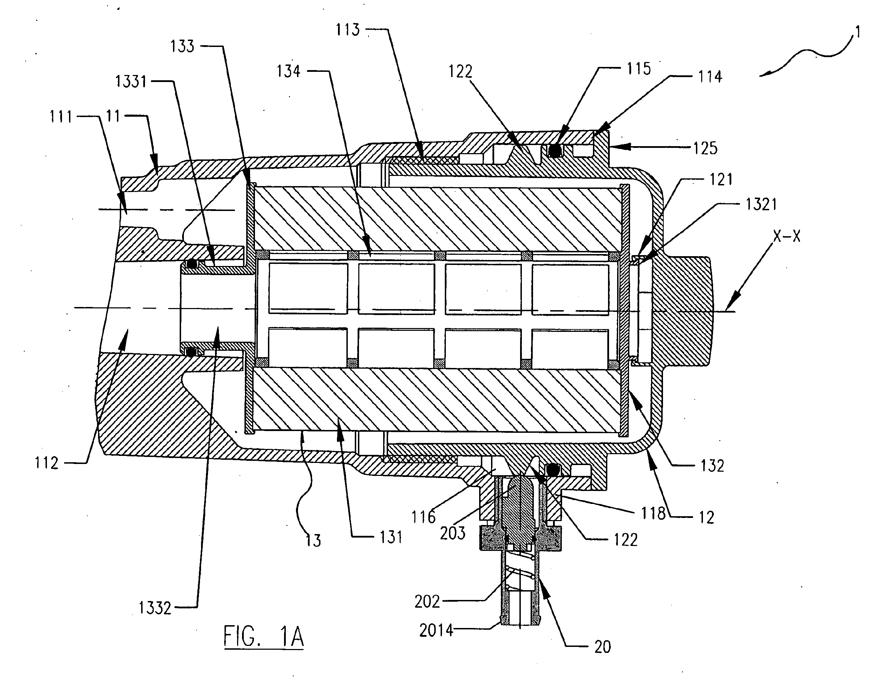

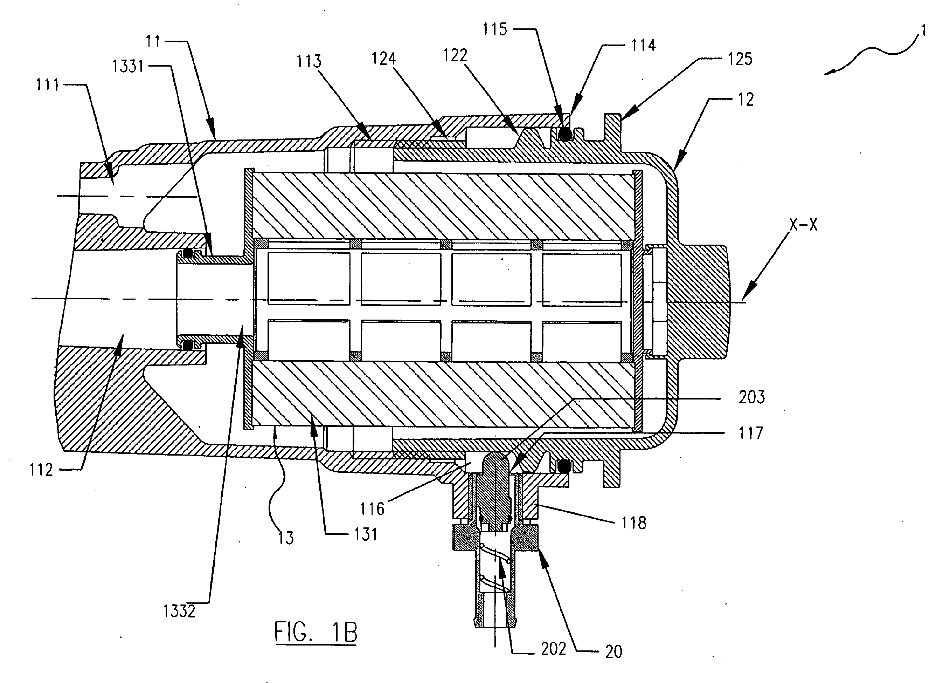

With reference to Figures 1A and 1B, the reference numeral 1 indicates overall an oil filter device in accordance with the present invention.

The filter device 1, or simply filter, comprises essentially a container 11 of horizontal axis X-X, usually fixed to the engine crankcase, not shown, a cover 12 sealedly screwed onto the right side (in Figures 1A and 1B) of the container 11, an inlet conduit 111 for the oil to be filtered, an outlet conduit 112 for the filtered oil, both on the left, and a filter cartridge 13 inserted into the container 11.

The cover 12, described in detail hereinafter, is of cup configuration with its cylindrical portion 123 fairly long so as to surmount an oil bleed aperture 117 provided in the container 11, at a radially extending annular projecting stem 118 facing downwards.

Specifically, when the cover 12 is totally screwed down on the container 11 (Figure 1A), the oil is prevented from passing through the bleed aperture 117, whereas when the cover 12 is unscrewed (Figure 1B) but before it is totally removed from the container 11, the oil in the container 11 can pass through the bleed aperture 117 without flowing from the edge 114 of the container 11, because the seal between the cover 12 and the container 11 is maintained, as it will be apparent hereinafter.

The filter cartridge 2 comprises a filtering baffle 131 enclosing a hollow cylindrical tube 134 provided with passage ports and a pair of discs, known for simplicity as the right disc 132 and the left disc 133 respectively. The opposing ends of the filtering baffle 131 and of the tube 134 are fixed to the right disc 132 and to the left disc 133 respectively.

The right disc 132 presents instant couplings 1321, of known type, removably cooperating with corresponding couplings 121 provided on the interior of the cover 12, which in practice acts as a filter support chamber.

The left disc 133 presents as central hole 1332 from which there extends a tubepiece 1331 to be sealedly inserted into the outlet conduit 112, which on the left side extends coaxially to the container 11 and parallel to the inlet conduit 111 which is positioned adjacent thereto.

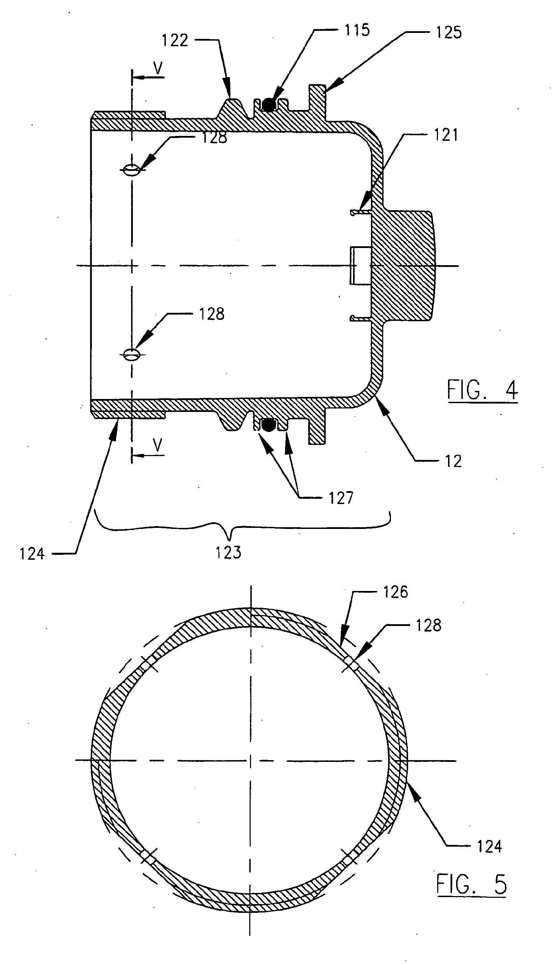

According to the present invention, the cylindrical portion 123 of the cover 12 (Figure 4) is provided, in proximity to its free end, with a threaded region 124 which screws into a corresponding thread 113 on the inside of the container 11, provided downstream (to the left in the figures) of the bleed aperture, i.e. in a position more inward from the end through which the cover 12 is inserted. The cylindrical portion 123 of the cover 12 is also provided with an external annular ledge which abuts against the outer edge 114 of the container 11, to the right in the figures, when the cover 12 is completely screwed down.

The seal between the cover 12 and the container 11 is achieved by a seal ring 115 inserted into a groove defined by two parallel circular ribs 127 provided at a predetermined distance from the annular abutment ledge 125 of the cover 12, to provide a seal both when the cover 12 is screwed totally down and when partially unscrewed.

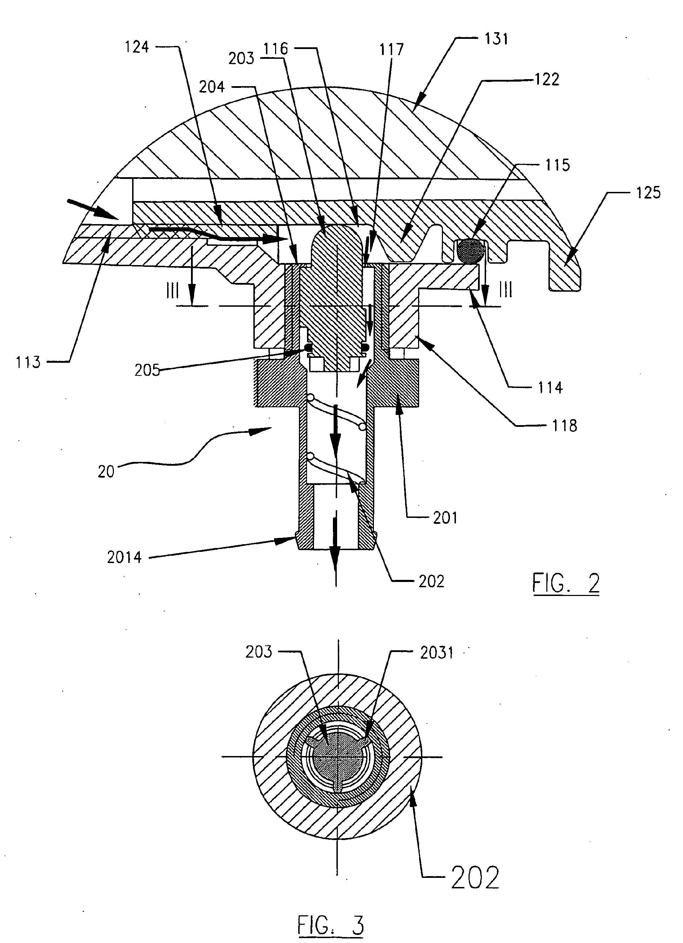

In practice, the bleed aperture 117 is situated between the thread 113 and the outer edge 114 of the container 11 which abuts against the cover 12. When the cover 12 is screwed down, the bleed aperture 117 always communicates with an annular chamber, or bleed chamber 116, defined on one side (to the left) by the threads 113, 124 and on the other side (to the right) by the seal ring 115, and by the outer wall of the cylindrical portion 123 of the cover 12 (Figure 2).

To directly connect the interior of the container 11 to said bleed aperture 117, the threaded region 124 of the cover 12 is provided, by milling, with two pairs of opposing flats 126 (Figure 5), in each of which there is provided a hole 128 which connects the interior of the container 11 to the bleed chamber 116 and hence to the bleed aperture 117.

To prevent the oil present in the container 11 from undesirably escaping through the bleed aperture 117 when the cover 12 is completely screwed down, i.e. under normal operation conditions, a shutoff valve 20 is provided (Figure 2), suitably operated by the cover 12.

According to the present invention, the valve 20 comprises essentially a valve body 201, a valving element 203 and a spring 202 (Figure 2).

The valving element 203 moves between a first position (Figure 1A), in which it closes the bleed aperture 117, and a second position (Figure 1B) in which it opens said aperture 117.

In the first position, the valving element 203 is urged by a circular step-shaped rib 122 provided on the cylindrical portion 123 of the cover 12. The rib 122 presents a thrust surface which acts on the valving element 203 against the force of the spring 202 present in the valve body 201.

In the second position, the rib 122 no longer thrusts against the valving element 203 which, under the action of the no longer opposed spring 202, frees an annular passageway through which the oil is free to flow.

In particular, the valving element 203 is of projectile configuration with a nose-shaped end by which it abuts against the thrust surface of the rib 122 when the cover 12 is completely screwed down, and a cylindrical portion with three longitudinal guide fins 2031 (Figure 3) which slide within corresponding grooves provided in the inner wall of the valve body 201, together with a bottom seal ring 205 (Figure 2).

The opening travel of the valving element 203 is limited by the presence of an annular abutment surface 204 provided on the edge of the valve body 201, on which the fins 2031 abut.

Essentially, when the cover 12 is completely screwed down on the container 11, the thrust surface of the rib 122 thrusts the valving element 203 into the valve body 201 against the action of the spring 202, so that a seal is achieved by the ring 205 , whereas when the cover 12 is unscrewed, the rib 122 translates to the right together with the cover 12 to release the valving element 203 which, under the thrust of the spring 202, opens the annular gap through which the oil is free to escape, so emptying the container 11. Release of the valving element 203 by the rib 122 takes place before the cover 12 is totally removed from the container 11, while the seal ring 115 still acts against the inner walls of the container 11, so ensuring a seal during oil bleed.

As the bled oil must be led away through a bleed conduit, an annular projection 2014 is provided on the outer surface of the valve body 201 to improve the seal with the bleed conduit.

During normal operation, the oil enters the filter 1 through the inlet conduit 111, passes through the filtering baffle 131 and leaves filtered through the outlet conduit 112.

When the cartridge 13 is to be replaced, the cover 12 is removed from the container 11 which remains fixed to the engine crankcase. To prevent the oil present in the container 11 from leaking out during this operation, the cover 12 is partially unscrewed to remove the rib 122 from its position of abutment against the valving element 203, but without affecting the seal provided by the ring 115. At this point the spring 202, no longer opposed by the rib 122, urges the valving element 203 to open a passage gap for the oil. This enables the oil still present in the container 11 to flow through the bleed aperture 117 before the cover 12 is completely removed from the container 11.

The initial utilization conditions are restored by simply again screwing down the cover 12, on which a new cartridge 13 has been fitted, until by virtue of its step configuration the rib 122 urges the valving element 203 towards the interior of the valve body 201 against the action of the spring 202, until the ring 205 forms a seal.

As will be apparent from the description, the filter device of the present invention satisfies those requirements and overcomes those drawbacks stated in the introductory part of the present description with reference to the known art.

An expert of the art can apply numerous modifications and variants to the aforedescribed filter device in order to satisfy specific contingent requirements, all contained within the scope of protection of the invention, as defined by the following claims.

## Claims

1. An oil filter device (1) comprising a container (11) provided with an inlet conduit (111) for the oil to be filtered and an outlet conduit (112) for the filtered oil, and a cover (12) for sealedly closing the container (11) within which a filter cartridge (13) is positioned, said container (11) being operatively disposed with its axis (X-X) substantially horizontal and having a bleed aperture (117) for the residual oil, said device further comprising a valving element (203) intercepting the bleed aperture (170) and controlled by the cover (12) which operates it between a first position, in which it closes passage through said aperture (117), and a second position, in which it frees passage through said aperture (117), wherein said cover (12) presents a cylindrical portion (123) to be axially inserted into the container (11) to surmount said bleed aperture (117), for controlling the valving element (203), said cylindrical portion (123) being provided with a rib (122) arranged to abut against said valving element (203), **characterized in that** said container (11) comprises a radially extending annular stem (118) wherein said valving element (203) slides within a bleed valve (20) upon acting by said rib (122) on said valving element (203).

2. A device (1) as claimed in claim 1, wherein said second position is reached following translation of the cover (12), which maintains the container (11) sealed.

3. A device (1) as claimed in claim 1, wherein said rib (122), when abutting against said valving element (203), acts against the force of a spring (202).

4. A device (1) as claimed in claim 1, wherein said cylindrical portion (123) of the cover (12) comprises a threaded region (124) which engages a corresponding thread (113) provided on the inside of the container (11).

5. A device (1) as claimed in claim 4, wherein the threaded region of said cylindrical portion (123) comprises a plurality of flats (126) and within said flats (126) a plurality of radial through holes (128) are positioned.

6. A device (1) as claimed in claim 1, wherein said valving element (203) presents at least one fin (2031) arranged to slide within a corresponding groove provided in the inner walls of the valve (20).

7. A device (1) as claimed in claim 1, wherein said valve (20) comprises a circular external projection (2014) arranged to cooperate with the end of a bleed conduit, in order to improve its seal.

8. A device (1) as claimed in claim 1, wherein said cover (12) comprises first coupling means (121) arranged to cooperate with second coupling means (1321) provided at one end of said cartridge (13).

9. A device (1) as claimed in claim 1, wherein said cartridge (13) comprises means (1331) for its connection to the container (11).

10. A device (1) as claimed in claim 9, wherein said connection means (1331) are provided on an end disc (133) of the cartridge (13) and cooperate with said outlet aperture (112) for the filtered oil.

## Patentansprüche

1. Eine Ölfiltervorrichtung (1) mit einem Behälter (11), ausgestattet mit einer Einlassleitung (111) für das zu filternde Öl und einer Auslassleitung (112) für das gefilterte Öl, sowie einer Abdeckung (12) für das dichte Verschließen des Behälters (11), in dem sich eine Filterkartusche (13) befindet, wobei der besagte Behälter (11) mit seiner Achse (X-X) im Wesentlichen horizontal wirkend ausgerichtet ist und eine Auslassöffnung (117) für das restliche Öl aufweist, wobei die besagte Vorrichtung außerdem ein Ventilelement (203) aufweist, das die Auslassöffnung (170) absperrt und von der Abdeckung (12) kontrolliert wird, die es zwischen einer ersten Position betreibt, in der es die besagte Öffnung (117) verschließt, und einer zweiten Position, in der es die besagte Öffnung (117) öffnet, wobei die besagte Abdeckung (12) einen zylindrischen Teil (123) aufweist, der axial in den Behälter (11) eingeführt wird, um die besagte Auslassöffnung (117) zu übersteigen, um das Ventilelement (203) zu kontrollieren, wobei der zylindrische Teil (123) eine Rippe (122) aufweist, die an das besagte Ventilelement (203) angrenzt, **dadurch gekennzeichnet, dass** der besagte Behälter (11) einen ringförmigen Stiel (118) aufweist, der sich in radialer Richtung erstreckt, wobei sich das besagte Ventilelement (203) durch Wirkung der besagten Rippe (122) auf das besagte Ventilelement (203) in einem Auslassventil (20) verschiebt.

2. Eine Vorrichtung (1) gemäß Anspruch 1, wobei die besagte zweite Position durch Verschiebung der Abdeckung (12) erreicht wird, die den Behälter (11) versiegelt hält.

3. Eine Vorrichtung (1) gemäß Anspruch 1, wobei die besagte Rippe (122) gegen die Kraft einer Feder (202) wirkt, wenn sie an das besagte Ventilelement (203) angrenzt.

4. Eine Vorrichtung (1) gemäß Anspruch 1, wobei der besagte zylindrische Teil (123) der Abdeckung (12) einen Gewindebereich (124) aufweist, der in ein entsprechendes Gewinde (113) in der Innenseite des Behälters (11) eingreift.

5. Eine Vorrichtung (1) gemäß Anspruch 4, wobei der Gewindebereich des besagten zylindrischen Teils (123) eine Vielzahl von Flächen (126) aufweist und wobei sich in den besagten Flächen (126) eine Vielzahl von radialen durchgehenden Bohrungen (128) befinden.

6. Eine Vorrichtung (1) gemäß Anspruch 1, wobei das besagte Ventilelement (203) zumindest einen Grat (2031) aufweist, der in einer entsprechenden Kehle in der Innenwand des Ventils gleitet (20).

7. Eine Vorrichtung (1) gemäß Anspruch 1, wobei das besagte Ventil (20) einen runden, externen Vorsprung (2014) aufweist, der mit dem Ende der Auslassleitung zusammenarbeitet, um sie abzudichten.

8. Eine Vorrichtung (1) gemäß Anspruch 1, wobei die besagte Abdeckung (12) eine erste Kupplungsvorrichtung (121) aufweist, die mit einer zweiten Kupplungsvorrichtung (1321) am Ende der besagten Kartusche (13) zusammenarbeitet.

9. Eine Vorrichtung (1) gemäß Anspruch 1, wobei die besagte Kartusche (13) eine Vorrichtung (1331) für ihre Verbindung mit dem Behälter (11) aufweist.

10. Eine Vorrichtung (1) gemäß Anspruch 9, wobei sich die besagte Verbindungsvorrichtung (1331) auf eine Endplatte (133) der Kartusche (13) befindet und mit der besagten Auslassöffnung (112) für das gefilterte Öl zusammenarbeitet.

## Revendications

1. Un dispositif de filtre à huile (1) comprenant un récipient (11) doté d'une conduite d'entrée (111) pour l'huile à filtrer et une conduite de sortie (112) pour l'huile filtrée, et un couvercle (12) pour la fermeture étanche du récipient (11) dans lequel est positionnée une cartouche filtrante (13), ledit récipient (11) étant placé de façon opérationnelle avec son axe (X-X) substantiellement horizontal et disposant d'une ouverture de purge (117) pour l'huile résiduelle. Ce dispositif comprend également un élément de vanne mobile (203) interceptant l'ouverture de purge (170) et contrôlé par le couvercle (12) qui fonctionne entre une première position, dans laquelle il ferme le passage à travers ladite ouverture (117), et une deuxième position, dans laquelle il libère le passage à travers ladite ouverture (117), où ledit couvercle (12) présente une portion cylindrique (123) à insérer axialement dans le récipient (11) pour surmonter ladite ouverture de purge (117) afin de contrôler l'élément de vanne mobile (203). Ladite portion cylindrique (123) est dotée d'un épaulement (122) placé pour être contigu audit élément de vanne mobile (203). Ledit dispositif est **caractérisé par le fait que** ledit récipient (11) comprend une tige annulaire à extension radiale (118) où ledit élément de vanne mobile (203) coulisse dans une soupape de purge (20) par l'action dudit épaulement (122) sur ledit élément de vanne mobile (203).

2. Un dispositif (1) selon la revendication 1, où ladite deuxième position est atteinte après la translation du couvercle (12), qui maintient le récipient (11) scellé.

3. Un dispositif (1) selon la revendication 1, où ledit épaulement (122), lorsqu'il est contigu audit élément de vanne mobile (203), agit contre la force d'un ressort (202).

4. Un dispositif (1) selon la revendication 1, où ladite portion cylindrique (123) du couvercle (12) comprend une région filetée (124) qui se met en prise avec un filet correspondant (113) prévu à l'intérieur du récipient (11).

5. Un dispositif (1) selon la revendication 4, où la région filetée de ladite portion cylindrique (123) comprend plusieurs facettes (126) dans lesquelles sont positionnés plusieurs trous radiaux passants (128).

6. Un dispositif (1) selon la revendication 1, où ledit élément de vanne mobile (203) présente au moins une ailette (2031) disposée de sorte à coulisser dans une rainure correspondante prévue dans les parois internes de la soupape (20).

7. Un dispositif (1) selon la revendication 1, où ladite soupape (20) comprend une projection circulaire externe (2014) disposée de sorte à coopérer avec l'extrémité d'une conduite de purge afin d'améliorer son étanchéité.

8. Un dispositif (1) selon la revendication 1, où ledit couvercle (12) comprend un premier dispositif de couplage (121) disposé pour coopérer avec un deuxième dispositif de couplage (1321) prévu sur une extrémité de ladite cartouche (13).

9. Un dispositif (1) selon la revendication 1, où ladite cartouche (13) comprend un dispositif (1331) pour sa connexion au récipient (11).

10. Un dispositif (1) selon la revendication 9, où ledit dispositif de connexion (1331) est prévu sur un disque d'extrémité (133) de la cartouche (13) et coopère avec ladite ouverture de sortie (112) pour l'huile filtrée.
